# EUROPÄISCHE PATENTSCHRIFT

(11) **EP 0 838 118 B1**
(45) Veröffentlichungstag und Bekanntmachung des Hinweises auf die Patenterteilung: **16.12.1998**
(21) Anmeldenummer: 96908025.8
(22) Anmeldetag: 11.04.1996
(51) Int. Cl.: H04N 5/913

(54) **VIDEOSIGNALEMPFANGSEINRICHTUNG MIT AUFZEICHNUNGSSCHUTZ**
VIDEO SIGNAL RECEIVER WITH RECORDING PROTECTION
DISPOSITIF RECEPTEUR DE SIGNAUX VIDEO AVEC PROTECTION D'ENREGISTREMENT

(30) Priorität: 12.07.1995 DE 19525425
(43) Veröffentlichungstag der Anmeldung: 29.04.1998
(73) Patentinhaber: SIEMENS AKTIENGESELLSCHAFT, 80333 München (DE)
(72) Erfinder: BROMBA, Manfred, D-81669 München (DE); Rönner, Karsten, Tokyo 145 (JP)
(86) Internationale Anmeldenummer: DE9600639
(87) Internationale Veröffentlichungsnummer: WO9703519

(56) Entgegenhaltungen:
- EP-A- 0 267 039
- EP-A- 0 348 218

## Beschreibung

Die Erfindung betrifft eine Videosignalempfangseinrichtung, an die ein Videosignalaufzeichnungsgerät anschließbar ist.

Beim Empfang von Videosignalen, sowohl bei leitungsgebundener Übertragung als auch bei Rundfunkübertragung, ist heutzutage für manche Sendungen eine Empfangsberechtigung notwendig. Beispielsweise können Sendungen vom Sender verschlüsselt übertragen werden, und nur diejenigen Empfangsteilnehmer, die entsprechende Mittel zum Entschlüsseln besitzen, die gegen Lizenznahme erworben werden können, können solche Sendungen empfangen. Diese Dienste werden heutzutage mit Pay-TV oder Video-On-Demand bezeichnet. In der US-Patentschrift 4,930,160 ist eine Videosignalempfangseinrichtung beschrieben, bei der die Darstellung einer Videosendung durch eine Steuerungseinrichtung blockierbar ist. In der Steuerungseinrichtung wird hierzu ein senderseitig erzeugter und übertragener Code ausgewertet. Grundsätzlich besteht auf Seiten der Empfangsgerätehersteller im Interesse der Sender das Bestreben, die Aufzeichnung von Sendungen, die einem Zugangsschutz unterliegen, zu erschweren oder gar unmöglich zu machen.

Bisher wird dies dadurch erreicht, daß im Empfangsgerät der Synchronsignalanteil des Videosignals, derart beeinflußt wird, daß eine Anzeige an einem Bildschirmgerät ohne weiteres möglich ist, eine Aufzeichnung mit einem Videorecorder aber eine äußerst schlechte Qualität liefert oder gar unmöglich ist. Bei einer bekannten Lösung wird bei einem Farbcoder, der digital übertragene und empfangene Videosignale in Analogsignale zur Ansteuerung herkömmlicher Fernsehgeräte und Videorecorder umwandelt, der Synchronsignalanteil mit einem bewußt eingeführten Phasenjitter versehen. Den Synchronisationseinrichtungen des Fernsehgeräts, die üblicherweise eine relativ geringe Zeitkonstante aufweisen, ist es möglich, diesem Phasenjitter zu folgen und ein hochwertiges Bild zu erzeugen. Aufzeichnungsgeräte hingegen, insbesondere Videorecorder, können aufgrund der trägen Masse der rotierenden Videotrommel dem Phasenjitter des Synchronsignalanteils nicht folgen. Folglich sind solche Sendungen nur an einem Bildschirmgerät darstellbar, können aber nicht aufgezeichnet werden. Die Anschlüsse des Empfangsgeräts, an die Aufzeichnunggeräte und Bildschrimgeräte angeschlossen werden können, werden nicht unterschieden. Die bewußte Einfügung von Störungen im Synchronsignalanteil kann aber bei manchen Fernsehgeräten zu Problemen bei der Signalverarbeitung führen. Außerdem liegen bereits Schaltungen zur Zeitbasiskorrektur vor, mit denen die gestörten Videosignale korrigiert werden können, so daß sie trotzdem zur Aufzeichnung geeignet sind.

In der EP-A-0 267 039 ist eine Einrichtung beschrieben, in der ein Videosignal empfangbar ist, welches ein Kennzeichen enthält, das angibt, ob eine Aufzeichnung des Videosignals gestattet ist. Bei unerlaubter Aufzeichnung wird das Videosignal durch die Empfangseinrichtun derart beeinflußt, daß eine Aufzeichnung mit vernünftiger Qualität nicht mehr möglich ist.

In der EP-A-0 348 218 ist ein Doppeldeckvideorecorder beschrieben. Ein Aufzeichnungsvorgang wird blockiert, wenn das aufzuzeichnende Videosignal ein bestimmtes Kopierschutzsignal enthält.

Die Aufgabe der Erfindung besteht darin, eine andere Lösung für die Verhinderung einer Aufzeichnung von Sendungen mit Zugriffsschutz anzugeben, die möglichst einfach realisierbar ist und auf heutige Aufzeichnungsgeräte und Bildschirmgeräte ohne weitere Nachteile anwendbar ist.

Erfindungsgemäß wird diese Aufgabe durch eine Videosignalempfangseinrichtung nach den Merkmalen des Patentanspruchs 1 gelöst.

Eine weitere Aufgabe besteht darin, eine Umgehungslösung für den mit einer erfindungsgemäßen Videosignalempfangseinrichtung erreichten Aufzeichnungsschutz anzugeben.

Diese Aufgabe wird durch eine Einrichtung nach Anspruch 7 bzw. durch eine Verwendung nach Anspruch 8 erreicht.

Der Erfindung liegt die Erkenntnis zugrunde, daß heute hergestellten und vertriebenen Aufzeichnungsgeräten, insbesondere Videorecordern, Videoinformation nur unter Verwendung eines zusammengesetzten Videosignals zuführbar ist. Das zusammengesetzte Videosignal ist in den meisten Fällen das sogenannte Farbart-Bildaustastsynchronsignal (FBAS). Das FBAS-Signal enthält in einem einzigen Signal sowohl Horizontalsynchronimpulse, Farbburst, Schwarz-Weiß-Bildinformation und Farbbildinformation sowie Vertikalsynchronimpulse. Darüber hinaus sind Aufzeichnungsgeräte verfügbar, die einen Eingang für ein zusammengesetztes Bildaustastsynchronsignal (BAS oder Y) mit der Schwarz-Weiß-Bildinformation und den Horizontal- und Vertikalimpulsen sowie einen Eingang für ein die Farbinformation enthaltendes Signal (C) einschließlich des Farbbursts aufweisen. Dies trifft auf nahezu alle momentan verfügbaren Videorecorder zu. Als Anschlußmittel für diese Aufzeichnungsgeräte an ein Empfangsgerät dient dabei die genormte SCART-Buchse. Fernsehgeräten hingegen ist die Videoinformation zusätzlich auch über die Rot-Grün-Blau-(RGB-)Farbsignale und den getrennten Leitungen für Synchron-und Vertikalimpulsen zuführbar. Auch hierzu wird die SCART-Buchse verwendet. Videorecorder, die mit RGB-Signalen angesteuert werden, werden derzeit nicht hergestellt oder vertrieben.

Bei der Erfindung ist eine erste Anschlußbuchse zum Anschluß des Fernsehgeräts vorgesehen und eine weitere Anschlußbuchse zum Anschluß des Videorecorders. Die Anschlußbuchsen sind beispielsweise SCART-Buchsen. Wird eine Sendung empfangen, für die eine Empfangsberechtigung erforderlich ist, wird der Anschluß für den Videorecorder blockiert. Die Sendung kann nur am Bildschirmgerät angesehen werden, nicht aber aufgezeichnet werden. Wegen der unterschiedlichen Anschlußschnittstellen für Fernsehgerät und Videorecorder im Empfangsgerät kann der Videorecorder nicht an der für das Fernsehgerät vorgesehenen Buchse betrieben werden. Eine Aufzeichnung einer mit Empfangsberechtigung versehenen Sendung ist mit handelsüblich verfügbaren Videorecordern somit nicht ohne weiteres möglich. Während des Empfangs einer nicht mit Empfangsberechtigung versehenen Sendung ist der Videorecorderanschluß nicht blockiert, so daß eine Sendung aufgezeichnet werden kann. Parallel dazu kann die Sendung auch am Fernsehgerät angezeigt werden, wobei der Benutzer auch weitere Funktionen, beispielsweise Teletextempfang oder am Bildschirm dargestellte Bedienungsmenüs, anfordern kann. Die Videosignalempfangseinrichtung kann als separates Gerät mit von außen zugänglichen Anschlüssen für Videorecorder und Fernsehgerät, beispielsweise in Form von SCART-Buchsen, ausgeführt werden oder innerhalb des Gehäuses eines Fernsehgeräts, bei dem zweckmäßigerweise nur der Anschluß für den Videorecorder zugänglich ist. Ein praktischer Schutz vor unerwünschter Aufzeichnung wird erfindungsgemäß mit gegenüber dem Stand der Technik geringerem Aufwand erreicht. Die Wiedergabequalität am Fernsehgerät wird nicht verringert.

Die Information zum Blockieren des Anschlusses für das Aufzeichnungsgerät wird senderseitig übertragen. Zur Auswertung sind im Empfangsgerät Steuerungsmittel vorgesehen, die den senderseitig eingespeisten Code für die Abschaltung des Ausgangs für das Aufzeichnungsgerät erkennen. Wenn Sendungen verschlüsselt übertragen werden, erkennt die Steuerungseinrichtung den Empfang der verschlüsselten Sendung und sperrt den Ausgang für das Aufzeichnungsgerät. Wenn senderseitig gewünscht wird, daß auch unverschlüsselte Sendungen nicht aufgezeichnet werden sollen, genügt es, ein entsprechendes Kennungssignal zu übertragen, das die Steuerungseinrichtung erkennt und in eine Abschaltung des Ausgangs für das Aufzeichnungsgerät umsetzt.

Wenn die Videoinformation mittels digitaler Signale übertragen wird, ist eine entsprechende Kennung in Form von softwaremäßiger Information ohne weiteres zusammen mit der Sendung übertragbar. Auch bei Übertragung nach analogen Sendestandards kann die Steuerungsinformation in der Vertikalaustastlücke, beispielsweise gemäß einem Teletextstandard oder gemäß einem Videoprogrammsystemstandard, als digitale Daten übertragen werden.

Das Videosignalempfangsgerät ist einfach und mit bereits vorliegenden Schaltungsmitteln ohne wesentlichen zusätzlichen Aufwand realisierbar. Eine Umgehung des Aufzeichnungsschutzes ist nur mit einer zusätzlichen Schaltungsmaßnahme möglich. Diese Schaltungsmaßnahme besteht in einem Zusatzgerät, das aus den am Anschluß für das Fernsehsignal abgreifbaren RGB-Signalen und Horizontal/Vertikalsynchronsignalen ein zusammengesetztes Videosignal erzeugt, entweder ein FBAS-Signal oder Y- und C-Signale oder beide kombiniert. Ein solches Zusatzgerät ist jedoch derzeit nicht verfügbar. Das erfindungsgemäße Videosignalempfangsgerät bietet demnach nach derzeitigem Stand einen guten Aufzeichnungsschutz mit sehr geringem Aufwand.

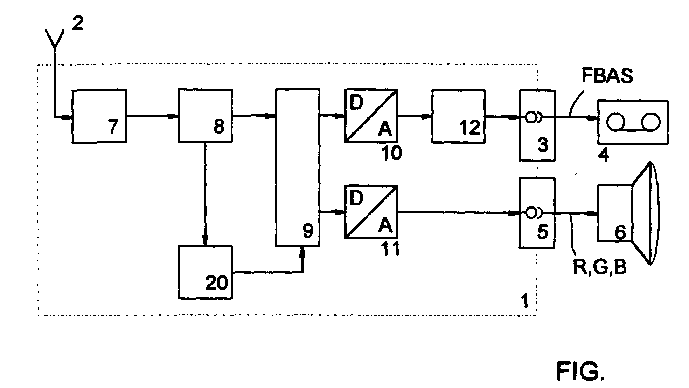

Die Erfindung wird nachfolgend anhand eines in der Figur dargestellten Ausführungsbeispiels näher erläutert. Das Videosignalempfangsgerät 1 empfängt an einer Antenne 2 eingespeiste digitale Videosignale, die nach einem digitalen Standard zur Codierung von Bewegtbildern, beispielsweise MPEG2, codiert sind. Alternativ kann eine Einspeisung über ein Kabelnetz vorgesehen werden. Ausgangsseitig enthält die Einrichtung 1 einen Ausgangsanschluß 3, an den ein Videorecorder 4 angeschlossen ist, und einen Ausgangsanschluß 5, an.den ein Fernsehgerät 6 angeschlossen ist. Das mittels der Antenne 2 eingespeiste Signal wird in einer Einrichtung 7 demoduliert und in einen digitalen Datenstrom umgesetzt. Der digitale Datenstrom wird anschließend einer Einrichtung 8 zugeführt, die für die Entschlüsselung von zum Zwecke der Zugriffskontrolle verschlüsselten Daten dient. Die Einrichtung 8 ist zweckmäßigerweise in das Gerät einsteckbar und kann gegen Zahlung einer Lizenzgebühr vom Betreiber des empfangenen Senders erhalten werden. Die Einrichtung 8 enthält den Schlüssel zur Entschlüsselung der verschlüsselt übertragenen Daten. Der von der Einrichtung 8 abgegebene entschlüsselte Datenstrom wird einer Einrichtung 9 zugeführt, die die Decodierung gemäß dem Übertragungsstandard durchführt. Die Einrichtung 9 ist im beschriebenen Beispiel ein MPEG2-Decoder. Der Decoder 9 erzeugt Ausgangssignale für den Zweig zum Anschluß des Videorecorders und den Zweig zum Anschluß des Fernsehgeräts. In jedem Zweig wird eine Digital/Analog-Wandlung durch je eine entsprechende Einheit 10 bzw. 11 durchgeführt. Im Zweig des Fernsehgeräts werden die vom Digital/Analog-Wandler 11 abgegebenen RGB-Signale und Horizontal- und Vertikalsynchronsignale direkt an den Ausgangsanschluß 5 geführt. Je nach Funktionsumfang kann diesen RGB-Signalen auch weitere Information, beispielsweise Videotextseiten oder Bedienungsmenüs zur Vornahme von Einstellungen im Gerät, eingeblendet werden. Im Zweig zum Anschluß des Videorecorders erzeugt der Digital/Analog-Wandler 10 ebenfalls RGB-Signale sowie die entsprechenden Synchronimpulse, die einer Einrichtung 12 zugeführt werden. In der Einrichtung 12 werden diese Signale zu einem einzigen Farbart-Bildaustastsynchronsignal FBAS umgesetzt. Die Umsetzung erfolgt nach den allgemein bekannten PAL-/NTSC-/SECAM-Standards. Das FBAS-Signal steht am Anschluß 3 zur Verfügung. Darüber hinaus können zusätzlich oder alternativ BAS- und C-Signale erzeugt werden (nicht dargestellt).

Die Anschlüsse 3 und 5 sind zweckmäßigerweise als genormte SCART-Buchsen ausgeführt. Beim Anschluß 5 sind nur die Anschlußleitungen für die RGB-Signale und die Horizontal- und Vertikalsignale beschaltet, gegebenenfalls zusätzlich noch Bezugspotentialverbindungsleitungen. Beim Anschluß 3 sind die Leitungen für das FBAS-Signal oder/und die Leitungen für das BAS-Signal und das C-Signal beschaltet.

Am Anschluß 3 ist ein herkömmlicher Videorecorder 4 angeschlossen, dem die Videoinformation nur über ein Farbart-Bildsaustastsynchronsignal zuführbar ist. Der handelsübliche Videorecorder 4 kann keine RGB-Signale auswerten. Am Anschluß 5 ist ein handelsübliches Fernsehgerät 6 angeschlossen, das zumindest RGB-Signale und die entsprechenden Synchronsignale in ein am Bildschirm darstellbares Bild umsetzen kann.

Durch die Steuerungseinrichtung 20 ist der Zweig für den Videorecorder durch senderseitige Steuerung abschaltbar, so daß die empfangene Sendung nicht über einen Videorecorder 4 aufgezeichnet werden kann, aber am Bildschirmgerät 6 betrachtet werden kann. Durch die Einrichtung 20 wird erkannt, daß eine verschlüsselte Sendung empfangen wird. Dies wird durch die Entschlüsselungseinrichtung 8 der Steuerungseinrichtung 20 mitgeteilt. Daraufhin schaltet die Einrichtung 20 den Zweig zum Anschluß des Videorecorders ab, beispielsweise den entsprechenden Ausgang des MPEG2-Dekoders.

Es ist auch möglich, daß senderseitig in den übertragenen Videodatenstrom entsprechende Softwareinformation eingefügt wird, die in der Einrichtung 20 ausgewertet wird, um den Ausgang für den Videorecorder des Decoders 9 abzuschalten. Somit kann auch bei unverschlüsselten Sendungen eine Aufzeichnung durch senderseitige Steuerung vermieden werden. Hierzu enthält die Steuerungseinrichtung 20 Mittel, durch die ein im Videodatenstrom enthaltener Steuerbefehl erkannt wird, so daß daraufhin der Zweig zum Anschluß des Videorecorders abgeschaltet wird.

Da derzeit handelsüblich verfügbare Videorecorder 4 keine Möglichkeit zur Einspeisung eines RGB-Signales vorsehen, ist die Aufzeichnung einer verschlüsselten Sendung nicht dadurch möglich, daß der Videorecorder 4 am Anschluß 5 für das Fernsehgerät angeschlossen wird.

Eine Umgehung des beschriebenen Aufzeichnungsschutzes ist jedoch dadurch möglich, daß ein Zusatzgerät entworfen wird, das an den Anschluß 5 anschließbar ist, und die dort bereitgestellten RGB-Signale und Synchronsignale in ein Farbart-Bildaustastsynchronsignal oder BAS- und C-Signale umsetzt. Der Videorecorder kann dann die am nicht blockierten Anschluß 5 anliegenden Signale auswerten und aufzeichnen, Das Zusatzgerät würde in der praktischen Ausführung im wesentlichen einen PAL-/NTSC-/SECAM-Coder 12 enthalten.

## Patentansprüche

1. Videosignalempfangseinrichtung, die aufweist:
- einen ersten Anschluß (3), an den ein Aufzeichnungsgerät (4), dem die Videoinformation in Form eines Bildaustastsynchronsignals mit einer Farbartinformation zuführbar ist, anschließbar ist und an dem zur Bereitstellung der Videoinformation nur das Bildaustastsynchronsignal mit der Farbartinformation abgreifbar ist, gekennzeichnet durch :
- einen zweiten Anschluß (5), an den eine Bildschirmanzeigeeinrichtung (6), der die Videoinformation in Form von einzelnen Farbsignalen (R, G, B) und Sychron- und Vertikalsignalen zuführbar ist, anschließbar ist und an dem mindestens die einzelnen Farbsignale und Synchron- und Vertikalsignale abgreifbar sind, und
- eine Steuereinrichtung (20), durch die die Signalabgabe am ersten Anschluß (3) durch eine senderseitig erzeugte Kennung veranlaßt blockierbar ist.

2. Einrichtung nach Anspruch 1,
**dadurch gekennzeichnet,** daß
die Steuereinrichtung (20) Mittel enthält, durch die der Empfang senderseitig verschlüsselter Daten erkennbar ist und daraufhin die Signalabgabe am ersten Anschluß (3) blockiert wird.

3. Einrichtung nach Anspruch 1 oder 2,
**dadurch gekennzeichnet,** daß
die Steuereinrichtung (20) Mittel enthält, durch die ein senderseitig erzeugter Steuerungsbefehl zum Abschalten erkennbar ist und daraufhin die Signalabgabe am ersten Anschluß (3) blockiert wird.

4. Einrichtung nach Anspruch 3,
**dadurch gekennzeichnet,** daß
der Steuerungsbefehl im digitalen Datenstrom eines digital von einem Sender übertragenen Videosignals enthalten ist und daß durch die Mittel der Steuereinrichtung (20) der Steuerungsbefehl im Datenstrom erkennbar und dekodierbar ist.

5. Einrichtung nach Anspruch 3,
**dadurch gekennzeichnet,** daß
das Videosignal von einem Sender als analoges Signal übertragen wird und daß der Steuerungsbefehl als digitaler Datenabschnitt in der Vertikalaustastlücke des Videosignals.übertragen wird, und daß durch die Mittel der Steuereinrichtung die digitalen Daten abtrennbar und der Steuerungsbefehl erkennbar und dekodierbar ist.

6. Einrichtung nach einem der Ansprüche 1 bis 5,
**dadurch gekennzeichnet,** daß
Bildaustastsynchronsignal mit der Farbartinformation als ein einziges Farbart-Bildaustastsynchronsignal (FBAS) oder als ein Bildaustastsynchronsignal mit einem weiteren Farbartsignal am ersten Anschluß (3) bereitgestellt wird.

7. Einrichtung nach einem der Ansprüche 1 bis 6,
**dadurch gekennzeichnet,** daß
an den zweiten Anschluß (5) eine Einrichtung angeschlossen ist, durch die aus den die Videoinformation bildenden Farbsignalen (R, G, B) und Synchron- und Vertikalsignalen ein Bildaustastsynchronsignal mit einer Farbartinformation erzeugbar ist, und daß diese Einrichtung einen Anschluß aufweist, an den ein Aufzeichnungsgerät anschließbar ist.

8. Verwendung einer Einrichtung, durch die aus eine Videoinformation bildenden Farbsignalen (R, G, B) und Synchron- und Vertikalsignalen ein Bildaustastsynchronsignal mit einer Farbartinformation erzeugbar ist und die einen Anschluß aufweist, an den ein Aufzeichnungsgerät anschließbar ist, zum Anschluß an den zweiten Anschluß einer Einrichtung nach einem der Ansprüche 1 bis 6.

## Claims

1. Video signal receiving device, which has:
- a first connection (3), to which a recording device (4) can be connected, to which recording device it is possible to feed the video information in the form of a video, blanking, syncs signal with a chrominance information item, and at which connection only the video, blanking, syncs signal with the chrominance information item can be picked off for the purpose of providing the video information, characterized by
- a second connection (5), to which a cathode ray tube display device (6) can be connected, to which cathode ray tube device it is possible to feed the video information in the form of individual colour signals (R, G, B) and sync and field signals, and at which connection at least the individual colour signals and sync and field signals can be picked off, and
- a control device (20), by which the signal output at the first connection (3) can be blocked, the blocking being caused by an identifier produced at the transmitter end.

2. Device according to Claim 1, characterized in that the control device (20) contains means by which the reception of data which have been encrypted at the transmitter end can be identified and in response the signal output at the first connection (3) is blocked.

3. Device according to Claim 1 or 2, characterized in that the control device (20) contains means by which a control command, produced at the transmitter end, for disconnection can be identified and in response the signal output at the first connection (3) is blocked.

4. Device according to Claim 3, characterized in that the control command is contained in the digital data stream of a video signal which is digitally transmitted by a transmitter, and in that the control command in the data stream can be identified and decoded by the means of the control device (20).

5. Device according to Claim 3, characterized in that the video signal is transmitted in the form of an analog signal by a transmitter, and in that the control command is transmitted as a digital data segment in the field blanking interval of the video signal, and in that the means of the control device can separate the digital data and identify and decode the control command.

6. Device according to one of Claims 1 to 5, characterized in that the video, blanking, syncs signal with the chrominance information item is provided in the form of a single chroma, video, blanking, syncs signal (CVBS) or in the form of a video, blanking, syncs signal with a further chrominance signal at the first connection (3).

7. Device according to one of Claims 1 to 6, characterized in that there is connected to the second connection (5) a device which can produce a video, blanking, syncs signal with a chrominance information item from the colour signals (R, G, B) and sync and field signals which form the video information, and in that this device has a connection to which a recording device can be connected.

8. Use of a device which can produce a video, blanking, syncs signal with a chrominance information item from colour signals (R, G, B) and sync and field signals which form video information, and which has a connection to which a recording device can be connected, for connection to the second connection of a device according to one of Claims 1 to 6.

## Revendications

1. Appareil enregistreur de signaux vidéo comprenant :
- une première prise (3) à laquelle peut être raccordé un appareil enregistreur (4) auquel peut être transmise l'information vidéo sous la forme d'un signal composite contenant une information de chrominance et duquel seul le signal composite contenant l'information de chrominance peut être prélevé pour fournir l'information vidéo, caractérisé par :
- une deuxième prise (5) à laquelle peut être raccordé un dispositif de visualisation (6) auquel l'information vidéo peut être transmise sous la forme de signaux couleur (R, V, B) et de signaux de synchronisation et de signaux verticaux et de laquelle peuvent être prélevés au moins les signaux couleur et les signaux de synchronisation et les signaux verticaux, et
- un dispositif de commande (20) par l'intermédiaire duquel la délivrance de signal peut être bloquée au niveau de la première prise (3) par un code produit côté émetteur.

2. Dispositif selon la revendication 1,
caractérisé en ce que le dispositif de commande (20) comprend des moyens qui permettent de reconnaître la réception de données cryptées côté émetteur puis de bloquer la délivrance de signal au niveau de la première prise (3).

3. Dispositif selon la revendication 1 ou 2,
caractérisé en ce que le dispositif de commande (20) comprend des moyens qui permettent de reconnaître une instruction de commande produite côté émetteur en vue d'une déconnexion, puis de bloquer la délivrance de signal au niveau de la première prise (3).

4. Dispositif selon la revendication 3,
caractérisé en ce que l'instruction de commande est contenue dans le flux de données numériques d'un signal vidéo transmis numériquement par un émetteur et que les moyens du dispositif de commande (20) permettent de reconnaître et de décoder l'instruction de commande dans le flux de données.

5. Dispositif selon la revendication 3,
caractérisé en ce que le signal vidéo est transmis par un émetteur sous la forme d'un signal analogique et que l'instruction de commande est transmise sous la forme d'un lot de données numériques dans l'intervalle de suppression de trame du signal vidéo et que les moyens du dispositif de commande permettent de séparer les données numériques et de reconnaître et de décoder l'instruction de commande.

6. Dispositif selon l'une des revendications 1 à 5,
caractérisé en ce que le signal composite contenant l'information de chrominance est fourni au niveau de la première prise (3) sous la forme d'un signal composite de chrominance (FBAS) unique ou sous la forme d'un signal composite avec un autre signal de chrominance.

7. Dispositif selon l'une des revendications 1 à 6,
caractérisé en ce qu'un dispositif est connecté à la deuxième prise (5), lequel dispositif permet de produire un signal composite contenant une information de chrominance à partir des signaux couleur (R, V, B) formant l'information vidéo et des signaux de synchronisation et des signaux verticaux et que ce dispositif comporte une prise à laquelle peut être raccordé un appareil enregistreur.

8. Utilisation d'un dispositif qui permet de produire un signal composite contenant une information de chrominance à partir des signaux couleur (R, V, B) formant l'information vidéo et des signaux de synchronisation et des signaux verticaux et qui comporte une prise à laquelle peut être raccordé un appareil enregistreur, lequel dispositif est destiné à être raccordé à la deuxième prise d'un dispositif selon l'une des revendications 1 à 6.
